(19) Europäisches Patentamt
European Patent Office
Office européen des brevets

(11) Publication number : **0 487 397 A1**

(12) **EUROPEAN PATENT APPLICATION**

(21) Application number : **91403096.0**

(51) Int. Cl.$^5$ : **C08K 5/09,** C08L 15/00

(22) Date of filing : **18.11.91**

(30) Priority : **21.11.90 US 616023**

(43) Date of publication of application :
**27.05.92 Bulletin 92/22**

(84) Designated Contracting States :
**AT BE CH DE FR GB IT LI NL**

(71) Applicant : **SARTOMER COMPANY, INC.**
**Oaklands Corporate Center 468 Thomas Jones Way**
**Exton, PA 19341 (US)**

(72) Inventor : **Costin, C. Richard**
**386 North Church Street**
**West Chester, PA 19380 (US)**
Inventor : **Nagel, Walter R.**
**1410 Allan Lane**
**West Chester, PA 19380 (US)**
Inventor : **Ceska, Gary W.**
**1082 Kenneth Way**
**West Chester, PA 19380 (US)**
Inventor : **Tuccio, Albert S.**
**1100 Meadowglen Road**
**Exton, PA 19380 (US)**

(74) Representative : **Dubost, Thierry Pierre**
**Cray Valley SA, BP 22**
**F-60550 Verneuil en Halatte (FR)**

(54) **Curable compositions and their use for obtaining cured elastomers.**

(57) A curable composition, comprising :
(a) a copolymer derived from at least one ethylenically unsaturated nitrile monomer and at least one conjugated diene monomer, the copolymer having a degree of saturation of the diene units of the copolymer of at least 80 % ;
(b) a crosslinking effective amount of zinc diacrylate and
(c) a cure effective amount of a free radical-generating compound.
Application to a method of providing a cured rubber article comprising forming the rubber article from a vulcanized product comprising the said curable composition.

EP 0 487 397 A1

This invention relates to the improved curing of a highly-saturated elastomeric copolymer derived from an ethylenically unsaturated nitrile monomer and a conjugated diene monomer through the use of zinc diacrylate as a crosslinking agent and, in particular, to cured hydrogenated ethylenically unsaturated nitrile-conjugated diene elastomeric compositions having high tensile strength, modulus, hardness and improved scorch resistance, in which vulcanization is accomplished with a free radical-generating compound and zinc diacrylate, and optionally an alkyl-substituted aminoalkyl phenol vulcanization inhibitor.

Non-sulfur cured elastomeric compositions have typically suffered from poor mechanical properties compared to sulfur-cured elastomers.

Curable elastomeric compositions containing various rubbery polymers and certain metal acrylates or methacrylates or certain metal diacrylates or dimethacrylates, including, among others, zinc diacrylate and zinc dimethacrylate, which may be cured with organic peroxide initiators, and cured rubber compositions formed from such compositions, are generally known in the art, as illustrated by the following patents and publications.

U.S. Patent No 4,918,144 relates to certain vulcanizable ethylenically unsaturated nitrile-conjugated diene rubber compositions, including hydrogenated acrylonitrile-butadiene rubbers, having improved tensile strength properties, comprising an organic peroxide and zinc dimethacrylate.

U.S. patent Nos. 4,500,466 and 4,713,409 relate to vulcanizable polymeric compositions having improved strength and hysteresis properties, comprising rubbery polymers selected from natural rubber ethylene/propylene copolymers, ethylene/propylene/diene terpolymers, styrene/butadiene copolymers, acrylonitrile-butadiene rubbers, chloroprene, and blends thereof, zinc dimethacrylate and a cure-effective amount of a peroxide curing agent.

Curable elastomeric compositions using salts of substituted acrylic acid are disclosed in U.S. Patent No. 3,823,122 with the preferred salt being zinc methacrylate.

U.S. patent No. 4,720,526 describes curable rubber compositions comprising a natural rubber, chloroprene, a nitrile rubber or blends thereof with a metal dimethacrylate together with a peroxide curing agent.

U.S. Patent No. 4,843,114 discloses a rubbery composition comprising a hydrogenated nitrile-conjugated diene elastomer, zinc oxide, zinc dimethacrylate, 1, 2-dihydro-2 ,2, 4-trimethylquinoline, carbon black and dicumyl peroxide, to yield cured rubbers having high tensile strength.

U.S. Patent No. 4,824,899 discloses sulfur-cured compositions of high elasticity, extension and fatigue resistance comprising a natural rubber or blend of natural rubber with a synthetic diene together with sulfur, a vulcanization accelerator, carbon black and a metal salt of acrylic acid, including zinc acrylate.

British Patent No. 1,091,818 describes cured rubbery poly (alpha-olefins) from mixtures of at least one alpha-olefin monomer, an organic peroxide curing agent and a metal salt of acrylic or methacrylic acid.

Compositions for the outer covers of golf balls comprising an ionomeric resin which consists of copolymer of ethylene, an unsaturated carboxylic acid and a metallic salt selected from metal acrylates or methacrylates, and including a second metal (meth)acrylate, wherein at least one metal (meth)acrylate is magnesium acrylate, magnesium methacrylate, calcium acrylate, calcium methacrylate, zinc acrylate, zinc methacrylate, aluminium acrylate or aluminium methacrylate are disclosed in U.S. Patent No. 4,483,537.

Homogeneous or two-piece molded golf balls made from a composition of cis-polybutadiene and a metal-containing crosslinking monomer are described in U.S. Patent Nos. 4,056,269 and 4,264,075. The metal-containing, crosslinking monomers are described as zinc, magnesium, calcium, lithium, sodium, potassium, cadmium, lead, barium, zirconium, beryllium, copper, aluminium, tin, iron, antimony and bismuth salts, or mixtures thereof, of homopolymerizable or copolymerisable monomers, including acrylic and methacrylic acids. The (meth)acrylate salts are either added or formed in situ.

Other abrasion-resistant, peroxide-cured rubber compositions employing natural rubber or homopolymeric elastomers of conjugated dienes such as 1,3-butadiene, isoprene, chloroprene and copolymeric elastomers of the conjugated dienes with vinyl-substituted aromatic hydrocarbons such as styrene, alpha-methylstyrene and vinyltoluene, and mixtures thereof, polymerized with an alpha-beta-ethylenically unsaturated carboxylic acid and a divalent metal compound, together with an organic peroxide, are disclosed in U.S. Patent No. 4,191,671. Disclosed metal-containing compounds include oxides, hydroxides and carbonates of zinc, magnesium, calcium, iron and cobalt, and metal-salts of aplha-beta-ethylenically unsaturated carboxylic acids, including acrylic and methacrylic acids.

Further golf ball compositions employing peroxide-cured butadiene, styrene-butadiene, isoprene, and trans-poly-isoprene elastomers as well as ionomeric resins together with fine inorganic fibers treated with a specified surface treating agent prior to mixing with the elastomers, and which compositions may optionally contain crosslinking monomers, are disclosed in U.S. Patent No. 4,955,966. The metal-containing, crosslinking monomers include various salts of unsaturated carboxylic acids, for example, metallic salts of acrylic and methacrylic acids, including zinc salts. Specific examples in the foregoing patent employ zinc acrylate as crosslinking coagent with the foregoing elastomers and the specified surface-treated inorganic fibers. A wide variety of other synthetic elastomers are generically disclosed as utilizable with the identified formulation constituents, including nitrile and nitrile-isobutylene rubbers.

As is evident from the foregoing patents, various crosslinking coagents have been used with peroxide-curable elastomers. The coagents make the curing process more efficient thus leading to an improved cure, as manifested by the cured rubbers having improved physical properties. Differences in coagent performance such as price, handling characteristics, physical properties achieved, scorch time, etc. means one coagent can not yield optimum performance in all performance areas. The present invention describes an improved coagent curing system for certain highly--saturated nitrile-conjugated diene elastomers.

An object of the present invention is to provide a free radical-curable rubber composition comprising a highly-saturated copolymer derived from at least one ethylenically unsaturated nitrile monomer and at least one conjugated diene monomer, and optionally other copolymerizable monomers, which rubber composition shows improved physical properties after curing, including increased tensile strength and modulus.

Another object of the present invention is to provide curable rubber compositions comprising a highly-saturated nitrile-diene copolymer, as aforesaid, which avoids or minimizes scorching when cured with free radical-generating initiators.

It has been discovered that the foregoing objects are achieved in one aspect of the present invention in which a free radical-curable elastomer composition comprising a highly-saturated nitrile-diene copolymer is crosslinked in a controlled manner with the aid of zinc diacrylate coagent and optionally an alkyl aminoalkyl phenol vulcanization inhibitor. Such highly saturated nitrile-diene copolymers may be prepared from at least one ethylenically unsaturated nitrile monomer, such as acrylonitrile or methacrylonitrile, and at least one conjugated diene monomer, for example, 1,3-butadiene. Optionally, other copolymerizable monomers may be reacted with the foregoing nitrile and diene monomers, to yield the copolymers utilizable in the cured rubber compositions of the present invention. The highly-saturated state of the indicated nitrile-diene copolymers is preferably accomplished by the hydrogenation of the diene units. Such hydrogenated copolymers include the preferred copolymer of acrylonitrile and 1,3-butadiene monomers, but are not limited thereto. In the foregoing compositions, the zinc diacrylate may be added per se or it may be formed in situ from acrylic acid and an appropriate reactive zinc compound.

According to the present invention, it is thus possible to yield cured copolymers having marked improvements in tensile strength and modulus values over other prior art compositions employing different crosslinking coagents.

Still another aspect of the present invention is a process for providing a rubber article formed from a highly-saturated nitrile-diene copolymer, having improved scorch resistance and/ or high tensile strength and modulus, by curing a composition of the present invention set forth above.

Accordingly, the present invention pertains to curable compositions, cured compositions produced from and the process of curing a blend of:

(a) a copolymer derived from at least one ethylenically unsaturated nitrile monomer and at least one conjugated diene monomer, said copolymer having a degree of saturation of the diene units of the copolymer of at least 80 % :

(b) a crosslinking effective amount of zinc diacrylate ;

(c) a cure effective amount of a free-radical generating compound; and

(d) optionally, a vulcanization inhibitor corresponding to the formula:

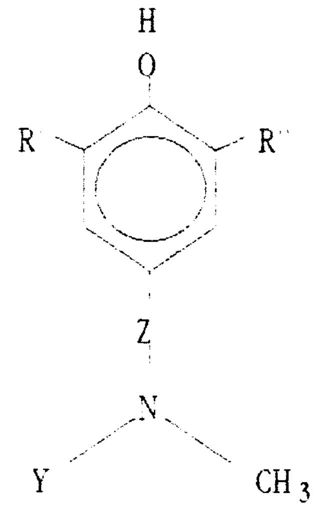

(I)

wherein R'and R" are each independently lower alkyl of about 1 to 6 carbon atoms, Z is an alkylene radical containing from 1 to 12 carbon atoms and Y is a member selected from the group consisting of an alkyl, cycloalkyl, aryl, alkaryl and aralkyl radical containing from 1 to 12 carbon atoms, or a lower alkyl substituted derivative of said aryl radicals containing 1 to 60 carbon atoms in the alkyl chain.

The term "highly-saturated nitrile-conjugated diene copolymer" as used herein is intended to mean copolymers derived from at least one ethylenically unsaturated nitrile monomer, for example, acrylonitrile and methacrylonitrile, and at least one conjugated diene monomer, for example, 1,3-butadiene, alpha-methyl- 1,3-butadiene, 2,3-dimethylbutadiene, isoprene, chloroprene, and piperylene, which copolymers following polymerization have a degree of saturation of the conjugated diene units thereof of greater than 80 % (preferably greater than 90 % and more preferably greater than 99 %), and which saturation may desirably be accomplished, but not be limited to, the hydrogenation of the diene units of the copolymer.

"Hydrogenated nitrile-conjugated diene" copolymers which may be employed in the present invention are generally produced by the selective and controlled hydrogenation of copolymer derived from at least one ethylenically unsaturated nitrile monomer and a conjugated diene monomer such as disclosed in U.S. Patent Nos. 4,384,081, 4,464,515, 4,503,196, 4,581,417, and 4,631,315.

Additional monomers copolymerizable therewith are utilizable and within the scope of the present invention. Such copolymerizable monomers would include alpha-beta unsaturated dicarboxylic acids containing from 4 to 5 carbon atoms such as maleic, itaconic, fumaric and citraconic acids, and alpha-beta unsaturated monocarboxylic acids containing from 3 to 5 carbon atoms such as acrylic, methacrylic and crotonic acids; alkyl esters of the foregoing carboxylic acids such as methyl (meth) acrylate, 2-ethylhexyl acrylate and octyl acrylate ; alkoxyalkyl acrylates such as methoxyethyl acrylate, ethoxyethyl acrylate and methoxyethoxyethyl acrylate ; vinyl aromatic substances such as styrene, o-, m- or p-methylstyrene, ethylstyrene, vinyltoluene, vinylnaphtalene and vinylpiridine ; vinyl chloride, vinylidiene chloride, isobutylene, 1-butene, ethylene, allyl glycidyl ether, vinyl chloroacetate and other like substances.

The hydrogenated nitrile-conjugated diene copolymers used in the present invention may have varying nitrile contents ranging from about 30 to about 50 %, typically 37 to 45 %. Selection of the appropriate copolymer will be predicated on the desired end-use and processing requirements. For instance, maximum heat resistance will be achieved by employing virtually fully-saturated copolymers (of about 99 % hydrogenation or greater). Grades of copolymers having saturation degrees of about 95 %o to 98 % may advantageously be employed to aid in durability under severe dynamic conditions or in special applications. Increased nitrile contents in the copolymers will generally improve oil and fuel resistance.

Compounds which decompose to produce free radicals during the curing cycle are advantageously used as curing agents in the present invention. Examples of the free-radical generating compounds of the present invention include : inorganic peroxides, such as hydrogen peroxide ; percarbonates ; persulfates, such as ammonium persulfate and potassium persulfate ; azo compounds, such as 2,2'-azobisisobutyronitrile, 2,2'-azobis-2-methylvaleronitrile, 1, 1'-azobis- 1-cyclohexane dinitrile, and the like ; and organic peroxides, such as lauryl peroxide and acetyl peroxide, and the like. Ditertiary peroxide curing compounds are generally preferred, which peroxides and their homologs correspond essentially to the structural formula (II) below :

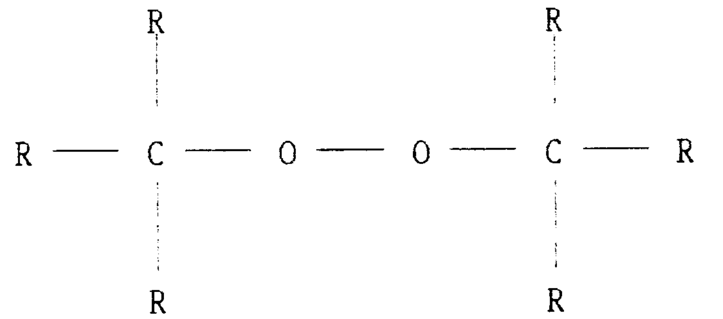

(II)

These ditertiary peroxide agents contain at least one peroxy group disposed between tertiary carbon atoms, which tertiary carbon atoms are linked to carbon atoms constituting portions of each of the R groups, which R groups may be alkyl (including straight, branched or cyclic) alkenyl or aryl groups, or mixtures of such groups, and which R groups may be further substituted by non-hydrocarbon groups, for example, ethers, additional peroxy groups, or halogen, such as chlorine, and which organic peroxides do not interfere with either the curing process or the cured elastomeric product.

Illustrative organic peroxides include diacetyl peroxide, dibenzoyl peroxide, dicapryl peroxide, di-(p-chloro-benzoyl)peroxide, didecanoyl peroxide, di-(2,4-dichlorobenzoyl) peroxide, diisobutyl peroxide, diisonanoyl peroxide, dilauroyl peroxide, dipelargonyl peroxide, dipropynyl peroxide, di-(beta-carboxypropinoyl)peroxide, methyl ethyl ketone peroxide, cyclohexanone peroxide, dihydroxy-dimethyl-dioxacyclopentane, t-butyl peroxide, t-butyl peroxy (2-ethylhexanoate), t-butylperoxyisobutylate, o,o-t-butyl-o-isopropylmonoperoxycarbonate, t-butylperoxypivalate, dimethyl-di(benzoylperoxy)-hexane, t-butyl-peroxy (2-ethylbutylate), di-t-butyl peroxide, dicumyl peroxide, 2,5-bis (t-butylperoxy)-2,5-dimethylhexane, t-butyl hydroperoxide, cumyl hydroperoxide, a,a'-bis-(t-butylperoxy)diisopropyl benzene, 1, 1-di-t-butylperoxy-3,3,5 -trimethylcyclohexane and n-butyl-bis (t-butylperoxy)-valerate and the like. Among the foregoing free radical-generating compounds mentioned above, dicumyl peroxide, 1,1-di-t-butylperoxy-3,3,5-trimethylcyclohexane, di-t-butyl peroxide, 2,5-dimethyl-2,5-di[t-butylperoxy]-2 hexane, 2,5-dimethyl-2,5-di-t-butylperoxy-3-hexyne, and a,a'-bis-(t-butylperoxy)-diisopropyl benzene are commercially available and convienently used. The foregoing organic peroxides may be used alone or in combinations.

The amount of the free radical-generating compound used in the rubber compositions of the present invention may be varied depending on the copolymer that is selected and the intended end use of the rubber composition. The required amount of free radical-generating compound required to practise the present invention is therefore a cure effective amount readily ascertainable by one of ordinary skill in the art, although it is generally to be employed in an amount of about 0.1 to about 15 parts per 100 parts (preferably about 1 to about 12 parts) of copolymer.

The present invention is based upon the surprising discovery that the zinc diacrylate crosslinking coagent employed in the curable rubber compositions described herein, yields markedly improved physical properties in the cured highly-saturated nitrile-conjugated diene copolymer rubber articles of the invention. Such results are surprising because zinc diacrylate, in contrast to zinc dimethacrylate, generally polymerizes very rapidly during curing, thereby rendering the curing reaction difficult to control and very exothermic. Moreover, elastomers cured with zinc dimethacrylate rather than zinc diacrylate would normally be exepected to demonstrate higher tensile strength based upon the effects of zinc dimethacrylate on other prior art elastomers. However, in the present invention a zinc diacrylate crosslinking coagent was advantageously employed with hydrogenated nitrile-conjugated diene copolymers to yield cured rubbers having markedly improved physical properties, including increased tensile strength, modulus, hardness and high temperature tensile strength. The amount of zinc diacrylate to be used as a crosslinking coagent in the present invention is not critical. It will therefore vary depending upon the copolymer that is selected and the intended end-use of the rubber composition and may be broadly stated as a crosslinking effective amount readily ascertainable by one of ordinary skill in the art. Generally, amounts of about 0.5 parts to about 100 parts (preferably 10 to 50 parts and more preferably 10 to 30 parts) per 100 parts of copolymer may be used.

The zinc diacrylate employed in the present invention is dispersable in the copolymer base or may be formed in situ by addition of suitable zinc compounds, such as oxides, hydroxides or carbonates, to the copolymer followed by the addition of acrylic acid in an appropriate stoichiometric amount, so that the resulting zinc diacrylate is formed during compounding and is properly dispersed throughout the elastomeric copolymer.

Optionally a modifier-retarder compound may be added to the composition in order to minimize scorching of the elastomer during free radical curing of the composition. The use of certain alkyl aminoalkyl phenols as modifier-retarder agents i.e. as vulcanization inhibitors, in a variety of elastomeric compositions has heretofore been taught in U.S. Patent No. 4,857,571. The alkyl aminoalkyl phenol retarders effectively retard scorching of the cured elastomer and confer certain antioxidant properties, while eliminating many safety and efficacy concerns of the prior art retardant compounds.

The alkyl aminoalkyl retarders that may advantageously be employed in the compositions of the present invention correspond to the formula (I) already specified above, said inhibitor being present in an amount of up to about 5 parts by weight per 100 parts by weight of elastomer :

Preferred retarders of the present invention are compounds conforming to the structural formula (I), wherein R′and R″ are each tertiary alkyl hydrocarbons, Z is an alkylene radical containing from 1 to 3 carbon atoms, i.e. methylene, ethylene and propylene radicals, and Y is a lower alkyl radical containing from 1 to 6 carbon atoms. A retarder employed in the present invention which is most preferred is 2,6-di-t-butyl-alpha-dimethylamino-p-cresol. It is to be further understood thai mixtures of the foregoing retarders are within the scope of the present invention.

Additional representative compounds of the retarders that may be employed in the present invention include :

2,6-dimethyl-4- [methyl(ethyl)amino] methyl phenol
2,6-diethyl-4- [dimethylamino] methyl phenol
2,6-di-t-butyl-4- [dimethylamino] ethyl phenol
2,6-di-t-amyl-4- [dymethylamino] ethyl phenol
2,6-di-t-butyl-4- [methyl(cyclohexyl)amino] methyl phenol
2,6-di-t-butyl-4- [methyl(phenyl)amino] n-propyl phenol
2,6-di-t-amyl-4- [methyl(benzyl)amino] ethyl phenol
2,6-di-t-butyl-4- [methyl(4-t-butylphenyl)amino] n-butyl phenol
2,6-di-n-propyl-4-[methyl(4-t-butylbenzyl)amino]n-propyl phenol
2,6-di-i-butyl-4- [dimethylamino] n-hexyl phenol

The modifier-retarder alkyl-substituted aminoalkyl phenol compounds described herein may generally be added to the compositions of the present invention in amounts between preferably about 0.1 to about 2 parts by weight per 100 parts by weight of the elastomer to be cured.

Without departing from the scope of the present invention, and as appreciated by those skilled in the art, inert fillers may desirably be included in the curable compositions of the invention. If an inert filler is desired, any known or conventional filler which does'nt interfere with the curing process may be used, and such fillers are desirably in finely divided form. Suitable fillers include but are not limited to the following : silica and silicates, thermal blacks (i.e. furnace, channel or lamp carbon black), clays, kaolin, diatomaceous earth, zinc oxide, cork, titania, cotton floc, cellulose floc, leather fiber, plastic fiber, plastic flour, leather flour, fibrous fillers such as glass and synthetic fibers, metal oxides and carbonates and talc. Particularly useful is zinc oxide or zinc carbonate. The amount of inert filler is dictated by its type and the intended end-use of the composition and, in general, may be less than about 30 parts by weight per 100 parts by weight of copolymer, and more preferably, less than about 15 parts.

Other additives that may be added to the curable compositions of the present invention, depending upon the intended end-use of the cured rubber, include antioxidants, U V stabilizers antiozonants, plasticizers, mold release agents, tackifiers, anti-tack agents, dispersants, solvents, softening agents, fatty acids such as stearic acid, processing aids, coloring agents and the like.

The aforementioned ingredients are mixed and cured by any conventional means. Mixing may be accomplished by charging the ingredients to a Banbury mixer or a rubber mixing mill and intimately mixing the ingredients until the composition is uniform. Thereafter the unvulcanized composition is removed from the mill or mixer and then may be preformed through an extruder. The extruded unvulcanized composition then can be cut to size, molded and cured. Reaction temperatures and pressures should be sufficient to melt the reactants and to thermally decompose the free radical-generating compound. Thus, the selection of the reaction temperature will be predicated upon the copolymer and free radical-generating compound that is selected. The temperature useful in the present invention may vary between wide limits such as from 90°C to 250°C and preferably from about 138°F to about 215°F.

The invention will be further clarified by a consideration of the following examples, which are intended to be purely exemplary of the use of the invention.

EXAMPLES

In the following Tables, all of the ingredients are expressed in parts by weight (unless otherwise noted) and each column corresponds to a numbered Comparative Example or an Example.

Comparative Example 1

A batch of athylene-propylene-diene (EPDM) terpolymer available as NORDEL 1040 from DuPont Co. was masticated on a two roller mill until an acceptable bead was established in the conventional manner. Thereafter, for each 100 parts of EPDM elastomer, and in accordance with the recipe listed on Table 1, 100 parts of semi-reinforcing carbon black ASTM N-762 (ASTM D-1765 designation for a normal curing furnace black), 50 parts of SUNPAR™ 2280 a proprietary plasticizer available from the Sun Refining and Marketing Company, 5 parts of zinc oxide, 1 part of stearic acid, 1 part of polymerized 1,2-dihydro-2,2,4-trimethylquinoline AGERITE™ RESIN D, 0.3 parts of 2,6-di-t-butyl-alpha-dimethylamino-p -cresol, 14.7 parts of zinc diacrylate and 7.5 parts of dicumyl peroxide, were added slowly to the flux roll and the band was cut and mixed ten times on the mill until a uniform, smooth band was developed. Thereafter, the unvulcanized compound strip was cut, compression molded and cured for 20 minutes at 160°C.

Specimens of 75 mil thickness were tested on a Thwing Albert tensile tester in accordance with ASTM D 412. Modulus values at 100 % elongation were also recorded in accordance with ASTM D 412. Shore A hardness values were obtained in accordance with ASTM D 1415. The results obtained with this vulcanized composition may be found reported on Table 1.

Comparative Examples 2-4

Rubber compositions were produced by repeating the procedure of Comparative Example 1 except that the recipes for Comparative Examples 2-4, which may be found on Table 1, were followed. Comparative Example 2 involved the substitution of an equal weight of zinc dimethacrylate for the zinc diacrylate of Comparative Example 1. Comparative Example 3 utilized an increased amount of 19.6 parts of zinc diacrylate and an increased amount of 0.4 parts of 2,6-di-t-butyl-alpha-dimethyl-amino-p-cresol, whereas Comparative Example 4 employed 19.6 parts of zinc dimethacrylate in place of zinc diacrylate. Tensile strength, modulus at 100 % elongation and hardness, Shore A values for these vulcanized rubber compositions may be found on Table 1.

Comparative Example 5

A batch of acrylonitrile-butadiene (NBR) copolymer available as HYCAR™ 1042 from B.F. Goodrich Chemical, was masticated on a two roller mill until an acceptable bead was established in the conventional manner. Thereafter, for each 100 parts of NBR elastomer, and in accordance with the recipe listed on Table 1, 65 parts of ASTM reinforcing furnace black N-365, 15 parts of dioctyl phtalate, 5 parts of zinc oxide, 1 part of polymerized 1,2-dihydro-2,24-trimethylquinoline, 0.3 parts of 1,6-di-t-butyl-alpha-dimethylamino-p-cresol 14.7 parts of zinc diacrylate and 5 parts of dicumyl peroxide, were added slowly to the flux roll and the band was cut and mixed ten times on the mill until a uniform, smooth band was developed. Thereafter, the unvulcanized compound strip was cut, compression molded and cured for 20 minutes at 160°C.

Specimens of 75 mil thickness were tested on a Thwing Albert tensile tester in accordance with ASTM D 412. Modulus at 100 % elongation values were also recorded in accordance with ASTM D 412. Shore A Hardness values were obtained in accordance with ASTM D 1415. The results obtained with this composition may be found reported on Table 1.

Comparative Examples 6-8

Rubber compositions were produced by repeating the procedure of Comparative Example 5 except that the recipes for Comparative Examples 6-8, which may be found on Table 1, were followed. Comparative Example 6 involved the substitution of an equal weight of zinc dimethacrylate for the zinc diacrylate of Comparative Example 5. Comparative Example 7 utilized an increased amount of 19.6 parts of zinc diacrylate and an increased amount of 0.4 parts of 2,6-di-t-butyl-alpha-dimethyl-amino-p-cresol, whereas Comparative Example 8 employed 19.6 parts of zinc dimethacrylate in place of zinc diacrylate. Tensile strength, modulus at 100 % elongation and hardness, Shore A values for these vulcanized rubber compositions may be found on Table 1.

Comparative Example 9

A batch of silicone rubber available as SE64 from the General Electric Company was masticated on a two roller mill until an acceptable bead was established in the conventional manner. Thereafter, for each 100 parts of rubber, and in accordance with the recipe listed on Table 1, 20 parts of fumed silica reinforcing agent available as TS 720 from the Cabot Corp., 5 parts of General Electric Company proprietary plasticizer SE 4026, 0.05 parts of 2,6-di-t-butyl-alpha-dimethylamino-p-cresol, 2.45 parts of zinc diacrylate and 2 parts of 2,5-dimethyl-2,5-di-[t-butylperoxy] hexane, were added slowly to the flux roll and the band was cut and mixed ten times on the mill until a uniform, smooth band was developed. Thereafter, the unvulcanized compound strip was cut, molded and cured for 20 minutes at 160°C.

Specimens of 75 mil thickness were tested on a Thwing Albert tensile tester in accordance with ASTM D 412. Modulus at 100 % elongation values were also recorded in accordance with ASTM D 412. Shore A hardness values were obtained in accordance with ASTM D 1415. The results obtained with this vulcanized composition may be found reported on Table 1.

Comparative Example 10

A rubber composition was produced by repeating the procedure of Comparative Example 9 except that the recipe for Comparative Example 10, which may be found on Table 1, was followed. Comparative 10 involved the substitution of an equal weight of zinc dimethacrylate for the zinc diacrylate of Comparative Example 9. Tensile strength, modulus at 100 % elongation and hardness, Shore A values for this vulcanized rubber composition may be found on Table 1.

TABLE 1

COMPARATIVE EXAMPLES

| Rubber | 1 | 2 | 3 | 4 | 5 | 6 | 7 | 8 | 9 | 10 |
|---|---|---|---|---|---|---|---|---|---|---|
| EPDM[1] | 100 | 100 | 100 | 100 | - | - | - | - | - | - |
| NBR[2] | - | - | - | - | 100 | 100 | 100 | 100 | - | - |
| VMQ[3] | - | - | - | - | - | - | - | - | 100 | 100 |
| Zinc diacrylate | 14.7 | - | 19.6 | - | 14.7 | - | 19.6 | - | 2.45 | - |
| Zinc dimethacrylate | - | 14.7 | - | 19.6 | - | 14.7 | - | 19.6 | - | 2.45 |
| Dicumyl peroxide[4] | 7.5 | 7.5 | 7.5 | 7.5 | 5 | 5 | 5 | 5 | - | - |
| 2,5-dimethyl-2,5-di [t-butyl-peroxy] hexane[5] | - | - | - | - | - | - | - | - | 2 | 2 |
| Carbon black N-762[6] | 100 | 100 | 100 | 100 | - | - | - | - | - | - |
| Carbon black N-365[7] | - | - | - | - | 65 | 65 | 65 | 65 | - | - |
| Plasticizer (Sunpar 2280)[8] | 50 | 50 | 50 | 50 | - | - | - | - | - | - |
| Zinc oxide | 5 | 5 | 5 | 5 | 5 | 5 | 5 | 5 | - | - |
| Stearic acide | 1 | 1 | 1 | 1 | - | - | - | - | - | - |
| Polymerized 1,2-dihydro-2,2,4-trimethylquinoline[9] | 1 | 1 | 1 | 1 | 1 | 1 | 1 | 1 | - | - |
| 2,6-di-t-butyl-a-dimetylamino-p-cresol[10] | 0.3 | 0.3 | 0.4 | 0.4 | 0.3 | 0.3 | 0.4 | 0.4 | 0.05 | 0.05 |
| Dioctyl phtalate | - | - | - | - | 15 | 15 | 15 | 15 | - | - |
| Fumed silica[11] | - | - | - | - | - | - | - | - | 20 | 20 |
| Plasticizer[12] | - | - | - | - | - | - | - | - | 5 | 5 |
| Tensile strength[13] (in psi) | 1240 | 1130 | 1300 | 1150 | 2820 | 2360 | 3040 | 2570 | 290 | 350 |
| Modulus at 100 % Elongation (in psi) | 210 | 220 | 300 | 210 | 2420 | 1300 | 2630 | 1330 | 91 | 93 |
| Hardness - Shore A[14] | 67 | 66 | 69 | 68 | 80 | 82 | 85 | 82 | 50 | 46 |

Notes

1. NORDEL 1040 Ethylene-propylene-diene terpolymer available fom DuPont Co. of Wilmington, DE.
2. HYCAR 1042 acrylonitrile-butadiene copolymer available from B.F. Goodrich Chemical Group of Cleveland, OH.
3. Silicone rubber SE64 available from General Electric Co. of Waterforfd, NY.
4. DICUP 40KE dicumyl peroxide available from Hercules, Inc. of Wilmington, DE.
5. VAROX DBPH 50 2,5-dimethyl-2,5-di [t-butylperoxy] hexane available from R.T. Vanderbilt Co., Inc. of Norwalk, CT.
6. Semi-reinforcing furnace black ASTM N-762 grade.
7. Normal curing furnace ASTM N-365 grade.
8. SUNPAR 2280 proprietary processing aid of Sun Refining and Marketing Co. of Philadelphia, PA.
9. AGERITE D RESIN, available from R.T. Vanderbilt Co., Inc., of Norwalk, CT.
10. ETHANOX[703] available from Ethyl Corporation, Baton Rouge, LA.
11. TS 720 fumed silica available from the Cabot Corp. of Tuscola, IL.
12. SE 4026 proprietary plasticizer of General Electric Co. of Waterford, NY.
13. ASTM D 412-87 procedure.
14. ASTM D 1415 procedure.

Example 11

A batch of hydrogenated acrylonitrile-butadiene (greater than 99 % saturated) copolymer available as TORNAC™ 3855 from Polysar, Ltd was masticated on a two roller mill until an acceptable bead was established in the conventional manner. Thereafter, for each 100 parts of copolymer, and in accordance with the recipe listed on table 2, 7 parts of zinc oxide, 1 part of stearic acid, 10 parts of zinc diacrylate and 10 parts of dicumyl peroxide, were added slowly to the flux roll and the band was cut and mixed ten times on the mill until a uniform, smooth band was developed. Thereafter, the unvulcanized compound strip was cut, molded and cured for 20 minutes at 160°C.

Specimens of 75 mil thickness were tested on a Thwing Albert tensile tester in accordance with ASTM D 412. Modulus at 100 % elongation values and elongation percentages were also recorded in accordance with ASTM D 412. Shore A Hardness values were obtained in accordance with ASTM D 1415. Additional tensile strength tests were recorded on a sample heated to 177°C for at least 15 minutes. Scorch times and cure times were recorded musing a Monsanto Oscillating Disc Rheometer preheated at 177°C and stabilized at this temperature. One, two and five percent rises in scorch times were recorded as noted on Table 2. All of the results obtained with this composition may be found reported on table 2.

Example 12

A rubber composition was produced by repeating the procedure of Example 11 except that the recipe for Example 12, which may be found on Table 2, was followed. Example 12 involved the increased in weight of the zinc diacrylate to 20 parts by weight per 100 parts per weight of copolymer. The experimental results for this composition may be found on Table 2.

Examples 13-15

Rubber compositions were produced by repeating the procedure of Example 11, except that the recipe for Examples 13-15, which may be found on Table 2, were followed. Example 13 involved the addition of 1 part of N-isopropylphenyl-p-phenylene-diamine and 1 part of 1,2-dihydro-2,2,4-trimethylquinoline and increasing the amount of zinc diacrylate to 20 parts by weight per 100 parts by weight of copolymer. Example 14 was compounded similar to Example 13 except the zinc diacrylate was increased to 40 parts. Example 15 likewise was compounded similar to Example 14 except the zinc oxide was increased to 28 parts by weight per 100 parts by weight of copolymer. The results obtained with these compositions may be found reported on Table 2.

Comparative examples 16-18

Rubber compositions were produced by repeating the procedure of Example 11 except that the recipe for Examples 16- 18, which may be found on Table 2, were followed. Example 16 substituted 10 parts by weight of zinc dimethacrylate for the zinc diacrylate of Example 11. Examples 17 and 18 substituted, respectively, 20 parts and 40 parts of zinc dimethacrylate for the zinc diacrylate employed in Examples 13 and 14, respectively, which included the inhibitor combination of 1 part each of IPPD and TMQ. The results obtained with these compositions may be found reported on Table 2.

Example 19

A rubber composition was produced by repeating the procedure of Example 11 except that the recipe for Example 19, which may be found on Table 2, was followed Example 19 involved the addition of a scorch retardant, 2,6-di-t-butyl-alpha-dimethylamino-p-cresol to the composition. The experimental results for this composition may be found on Table 2.

Comparative example 20

A rubber composition was produced by repeating the procedure of Example 11 except that the recipe for Example 20, which may be found on Table 2, was followed. Example 20 invloved the substitution of an equal weight of calcium diacrylate for the zinc diacrylate of Example 11. A tensile strength value of only 1975 psi for this vulcanized rubber composition may be found on Table 2.

Comparative example 21

A rubber composition was produced by repeating the procedure of Example 11 except that the recipe for Example 21, which may be found on Table 2, was followed. Example 21 involved the substitution of an equal weight of divinyl adipate for the zinc diacrylate of Example 11. A tensile strength, value of only 1120 psi for this vulcanized rubber composition may be found on Table 2.

Table 2
EXAMPLES
(in parts by weight)

| | 11 | 12 | 13 | 14 | 15 | 16 | 17 | 18 | 19 | 20 | 21 |
|---|---|---|---|---|---|---|---|---|---|---|---|
| HNBR[1] | 100 | 100 | 100 | 100 | 100 | 100 | 100 | 100 | 100 | 100 | 100 |
| Zinc diacrylate | 10 | 20 | 20 | 40 | 40 | - | - | - | 20 | - | - |
| Zinc dimethacrylate | - | - | - | - | - | 10 | 20 | 40 | - | - | - |
| Calcium diacrylate | - | - | - | - | - | - | - | - | - | 20 | - |
| Divinyl adipate | - | - | - | - | - | - | - | - | - | - | 20 |
| Zinc oxide | 7 | 7 | 7 | 7 | 7 | 7 | 7 | 7 | 7 | 7 | 7 |
| Dicumyl peroxide | 10 | 10 | 10 | 10 | 10 | 10 | 10 | 10 | 10 | 10 | 10 |
| Stearic acide | 1 | 1 | 1 | 1 | 1 | 1 | 1 | 1 | 1 | 1 | 1 |
| IPPD[2] | - | - | 1 | 1 | 1 | - | 1 | 1 | - | 1 | 1 |
| TMQ[3] | - | - | 1 | 1 | 1 | - | 1 | 1 | - | 1 | 1 |
| ETHANOX 703[4] | - | - | - | - | - | - | - | - | 0.4 | - | - |
| Tensile Str.@ R.T. (in psi) | 3640 | 4870 | 4500 | 4330 | 4640 | 3220 | 3120 | 3210 | 3620 | 1975 | 1120 |
| Modulus @ 100% Elong. (in psi) | 198 | 303 | 235 | 660 | 638 | 139 | 205 | 358 | 335 | - | - |
| Hardness Shore A | 65 | 70 | 66 | 80 | 80 | 60 | 64 | 77 | 71 | - | - |
| Tensile Str. @ 177°C (in psi) | 530 | 940 | 390 | 1270 | 1470 | 500 | 207 | 420 | 510 | - | - |
| Elongation % | 1080 | 900 | 1320 | 650 | 725 | 1380 | 1730 | 1350 | 920 | - | - |
| Scorch time - | | | | | | | | | | | |
| TS - 1, Min | 1.3 | 1.1 | 1.7 | 1.5 | 1.5 | 1.3 | 1.4 | 1.5 | 1.7 | - | - |
| TS - 2, Min | 1.5 | 1.3 | 2.0 | 1.7 | 1.7 | 1.7 | 1.7 | 1.7 | 1.9 | - | - |
| TS - 5, Min | 2.1 | 1.6 | 2.6 | 2.2 | 2.2 | 2.8 | 2.6 | 2.3 | 2.2 | - | - |
| Cure time | | | | | | | | | | | |
| TC (50), Min | 3.9 | 2.8 | 3.8 | 3.8 | 3.8 | 4.4 | 3.2 | 4.0 | 2.8 | - | - |
| TC (90), Min | 12.0 | 10.4 | 12.1 | 10.7 | 10.2 | 12.3 | 12.0 | 12.5 | 8.8 | - | - |

Notes :
1. Hydrogenated nitrile-butadiene rubber available as TORNAC™ 3855 from Polysar, Ltd. of Sarnia, Canada.
2. N-isopropylphenyl-p-phenylene-diamine.
3. 1,2-dihydro-2, 2, 4-trimethylquinoline.
4. 2,6-di-t-butyl-alpha-dimethylamino-p-cresol available from Ethyl Corporation of Baton Rouge, LA.
5. ASTM method No. D412-87.

As in apparent from the data reported on Tables 1 and 2, zinc diacrylate and zinc dimethacrylate coagents conferred similar physical properties on the EPDM rubbers of Comparative Examples 1-4, the NBR rubbers of Comparative Examples 5-8 and the silicone VMQ rubbers of Comparative Examples 9-10. Zinc diacrylate produced a marked increase in tensile strength and modulus and good hardness results for the HNBR elastomers of the present invention in Examples 11 through 15 and 20. This apparent marked increase in crosslink density of the peroxide-cured HNBR elastomer/zinc diacrylate composition was not seen with the EPDM, NBR or VMQ elastomers. Further, the zinc diacrylate crosslinked elastomers of Examples 11 through 15 demonstrate an unexpected and marked increase in tensile strength (room temperature and at 177°C) over the same HNBR elastomer crosslinked with zinc dimethacrylate. The unexpected nature of the effects of zinc diacrylate upon the physical properties of the present invention is still further demonstrated by the poor mechanical properties of the HNBR rubbers cured with alternative crosslinking agents, namely, calcium diacrylate (Example 20) and divinyl adipate (Example 21). It is further evident that the combination of zinc diacrylate as a crosslinking agent couples with a vulcanization inhibitor, such as the inhibitor employed in Example 19, maintains the unexpected increase in tensile strength, both at room temperature and at 177°C while improving the scorch resistance and speeding the overall cure of the composition studied as evidenced by the respective scorch time and cure time date reported on Table 2 for Example 19 in comparison to other systems employed with zinc diacrylate (Examples 13 and 14) or zinc dimethacrylate, in Examples 13-15 and 17-18. A tensile strength value of only 1975 psi for this vulcanized rubber composition may be found on Table 2.

Other embodiments of the invention will be apparent to those skilled in the art from a consideration of this specification or practice of the invention disclosed herein. It is intended that the specification and examples be considered as exemplary only, with the true scope and spirit of the invention being indicated in the following claims.

## Claims

1. A curable composition, comprising:
   (a) a copolymer derived from at least one ethylenically unsaturated nitrile monomer and at least one conjugated diene monomer, the copolymer having a degree of saturation of the diene units of the copolymer of at least 80 % ;
   (b) a crosslinking effective amount of zinc diacrylate; and
   (c) a cure effective amount of a free radical-generating compound.

2. The composition of claim 1, wherein the zinc diacrylate is present in an amount of between 0.5 to 100 parts by weight per 100 parts by weight of the copolymer.

3. A composition according to one of claims 1 and 2, wherein the free-radicai generating compound is present in an amount between 0.1 to 15 parts by weight per 100 parts by weight of the copolymer.

4. A composition according to one of claims 1 to 3, wherein the ethylenically unsaturated nitrile monomer is selected from the group consisting of acrylonitrile and methacrylonitrile.

5. A composition according to one of claims 1 to 4, wherein the conjugated diene monomer is selected from the group consisting of 1,3-butadiene, isoprene, chloroprene, 1,3-pentadiene, piperylene and 2,3-dimethyl- 1,3-butadiene.

6. A composition according to one of claims 1 to 5, wherein the free radical-generating compound is an organic peroxide.

7. The composition of claim 6, wherein the organic peroxide is a di-tertiary peroxide selected from the group consisting of di-tertiary alkyl peroxides, di-tertiary alkenyl peroxides, di-tertiary aryl peroxides and mixtures thereof.

8. The composition of claim 7, wherein the organic peroxide is selected from dicumyl peroxide, 1,1-di-t-butylperoxy-3,3,5-trimethylcyclohexane and 2,5-dimethyl-2,5-di- [t-butylperoxy] hexane.

9. A composition according to one of claims 1 to 8, wherein the free radical-generating compound is present in an amount between 1 and 12 parts by weight per 100 parts by weight of said copolymer.

10. A composition according to one of claims 1 to 9, wherein the copolymer has a degree of saturation of the diene units of the copolymer of at least 90 %.

11. The composition of claim 10, wherein the copolymer has a degree of saturation of the diene units of the copolymer of at least 95 %.

12. The composition of claim 11, wherein the copolymer has a degree of saturation of the diene units of the copolymer of at least 99 %.

**13.** A composition according to one of claims 1 or 12, wherein the zinc diacrylate is present in an amount of 10 to 50 parts by weight per 100 parts by weight of the copolymer.

**14.** A cured elastomeric composition provided by curing a composition according to one of claims 1 to 13.

**15.** A composition composition according to one of claims 1 to 13, further comprising a vulcanization inhibitor corresponding to the formula:

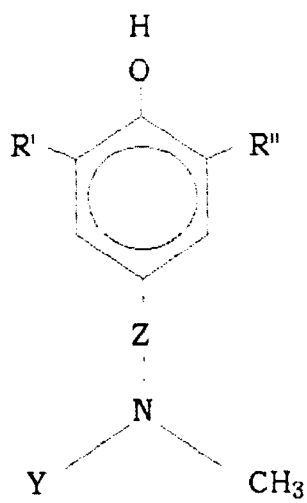

wherein R′and R″ are each independently lower alkyl of about 1 to 6 carbon atoms, Z is an alkylene radical containing from 1 to 12 carbon atoms, and Y is a member selected from the group consisting of an alkyl, cycloalkyl, aryl, alkaryl and aralkyl radical containing from 1 to 12 carbon atoms, and lower alkyl substituted derivatives of said aryl radicals containing 1 to 6 carbon atoms.

**16.** A composition according to claim 15, wherein the vulcanization inhibitor is present in an amount of up to about 5 parts by weight per 100 parts by weight of the copolymer.

**17.** A method of providing a cured rubber article comprising forming the rubber article from a vulcanized product comprising:

(a) a copolymer derived from at least one ethylenically unsaturated nitrile monomer, the copolymer having a degree of saturation of the diene units of the copolymer of at least 80 % ;

(b) a crosslinking effective amount of zinc diacrylate; and

(c) a cure effective amount of a free radical-generating compound.

European Patent Office

# EUROPEAN SEARCH REPORT

Application Number

EP 91 40 3096

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | CHEMICAL ABSTRACTS, vol. 111, no. 10, 1988, Columbus, Ohio, US; abstract no. 79699B, '&JP-A-63270753 (NIPPON ZEON) 8-11-88' * 4th IT-field, line 2 * * abstract * | 1-17 | C08K5/09 C08L15/00 |
| D,A | US-A-4 857 571 (R.H.REITER ET AL.) * claims 1,4,10,19 * | 15-16 | |
| A | EP-A-0 319 320 (HONDA GIKEN KOGYO KABUSHIKI KAISHA) | 1 | |
| | | | TECHNICAL FIELDS SEARCHED (Int. Cl.5 ) |
| | | | C08K |

The present search report has been drawn up for all claims

| Place of search | Date of completion of the search | Examiner |
|---|---|---|
| THE HAGUE | 25 FEBRUARY 1992 | VAN HUMBEECK F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)